Europäisches Patentamt

European Patent Office

Office européen des brevets

(11) Publication number: **0 074 326**
**B2**

## (12) NEW EUROPEAN PATENT SPECIFICATION

(45) Date of publication of the new patent
specification: **27.06.90**

(21) Application number: **82630082.4**

(22) Date of filing: **20.08.82**

(51) Int. Cl.⁵: **B 60 C 1/00, C 08 L 9/00**

(30) Priority: **04.09.81 US 299462**

(43) Date of publication of application:
**16.03.83 Bulletin 83/11**

(45) Publication of the grant of the patent:
**16.07.86 Bulletin 86/29**

(45) Mention of the opposition decision:
**27.06.90 Bulletin 90/26**

(84) Designated Contracting States:
**BE DE FR GB IT LU NL SE**

(56) References cited:
**BE-A- 730 418**
**FR-A-2 430 960**
**GB-A-1 166 832**
**GB-A-2 040 961**
**US-A-3 978 165**
**US-A-4 230 841**

The file contains technical information
submitted after the application was filed and
not included in this specification

### (54) Pneumatic tire with tread of medium vinyl polybutadiene/rubber blend.

(73) Proprietor: **THE GOODYEAR TIRE & RUBBER
COMPANY**
**1144 East Market Street**
**Akron, Ohio 44316-0001 (US)**

(72) Inventor: **Haas, Edward Joseph**
**3448 South Marcella**
**Stow Ohio 44224 (US)**
Inventor: **Montgomery, Edward Charles**
**3120 9th Street**
**Cuyahoga Falls Ohio 44221 (US)**
Inventor: **Scriver, Richard Martin, Jr.**
**3096 Alexander Road**
**Atwater Ohio 44201 (US)**

(74) Representative: **Schön, Alfred, Dr. et al**
**Patentanwälte Müller-Boré, Deufel, Schön,
Hertel Lewald, Otto Isartorplatz 6 Postfach 26 02
47**
**D-8000 München 26 (DE)**

Courier Press, Leamington Spa, England.

## Description

Field of Invention

This invention relates to tires. The invention particularly relates to pneumatic rubber tires having a rubber tread composition.

Background of the Invention

Pneumatic rubber passenger and truck tires are composed of elements which conventionally include a tread of a rubber composition. The tread rubber is sometimes desirably compounded to provide a tire with a relatively low rolling resistance with reasonable wear and traction.

Although it is desired to compound the tire's tread composition to reduce the rolling resistance of the tire without substantially degrading the tire's traction features, usually tire traction is often expected to be somewhat sacrificed as may be evidenced by its decrease in wet and dry skid resistance.

Various rubber compositions have been prepared for various purposes, some of which have included tire treads, which compose a polybutadiene containing a degree of 1,2-monomer configuration, sometimes referred to as vinyl content. Representative of such various compositions include those, for example, taught in various patent specifications such as U.S. 3,937,681 relating to a tire tread of polybutadiene containing twenty-five to fifty percent of its monomer units in a 1,2-position, British Patent 1,166,832 relating to a tire tread of "high vinyl" butadiene rubber containing at least fifty percent of 1,2-addition, U.S. 4,192,366 relating tto a tire of polyisoprene and medium vinyl polybutadiene rubbers, U.S. 4,259,218 relating to a composition of "medium vinyl" polybutadiene and blends thereof with natural rubber where such composition is required to contain a certain carbon black, U.S. 3,978,165 relating to a composition, taught to be useful for tire treads composed of (a) "medium vinyl" polybutadiene, (b) polybutadiene and (c) butadiene/styrene rubbers and U.S. 3,827,991, U.S. 4,220,564 and U.S. 4,224,197 relating to combinations of polybutadiene containing at least seventy percent of 1,2-configuration with various other rubbers.

In U.S. Patent 4,230,841, there is taught that a medium vinyl polybutadiene can be prepared by copolymerizing butadiene with a small amount of divinylbenzene in a hydrocarbon solvent employing an alkyl-lithium compound as a catalyst with the inclusion of mixtures of described polar compounds, or "catalyst modifiers".

In British Patent 1,261,371 there is disclosed rubber compositions (reportedly applicable for use in tire treads) composed of (A) rubbery conjugated diene polymer having less than 30% side chain unsaturation blended with (B) rubbery conjugated diene homopolymer having more than 30% side chain unsaturation. It is taught therein that polymer (B) may be, for example, a homopolymer of butadiene.

Although such rubber compositions are sometimes taught to provide various benefits, some for tire treads, it continues to be desireable to provide a pneumatic tire having a rubber tread having an enhanced rolling resistance and/or treadwear commensurate with reasonable traction qualities.

Statement and Practive of Invention

In accordance with this invention, a pneumatic tire is provided having an outer circumferential tread adapted to be ground contacting where said tread is a sulfur cured elastomeric composition comprised of, based on 100 parts by weight rubber (phr), (A) 20 to 90, preferably 70 to 25, parts by weight medium vinyl polybutadiene rubber having a 35 to 48 percent vinyl content, (B) 10 to 60, preferably 15 to 50, parts by weight low vinyl polybutadiene rubber having a 1 to 15, preferably 1 to 10, percent vinyl content and (C) up to 55 weight percent cis 1,4-polyisoprene rubber; where said medium vinyl polybutadiene in its uncured state has a ML4 (100°C) in the range of 40 to 120 and is prepared by polymerizing 1,3 butadiene with a very small amount of divinylbenzene in a hydrocarbon solvent system with an alkyl lithium catalyst and in the presence of at least one polar catalyst modifier wherein 0.1 to 1.0 millimoles of active alkyl lithium per 100 grams of butadiene are used and the mole ratio of divinylbenzene to alkyl lithium is in the range of 0.1 to 0.9.

In further accordance with this invention, such a pneumatic tire is provided characterized in that said tread elastomeric composition has 40 to 90 parts by weight medium vinyl polybutadiene rubber therein.

In further accordance with this invention, such a pneumatic tire is provided characterized in that said tread elastomeric composition has 20 to 80 parts by weight medium vinyl polybutadiene rubber therein, and at least 10 parts by weight of cis 1,4 polyisoprene rubber therein.

In additional accordance with this invention, such a tire is provided containing the prescribed 20—90 parts by weight medium vinyl polybutadiene characterized in that said tread composition has 25 to 70 parts by weight of medium vinyl polybutadiene therein, and up to 50 parts by weight of cis 1,4 polyisoprene rubber therein.

In one aspect of this invention, such a tire is characterized in that said low vinyl polybutadiene rubber is selected from the group consisting of organic solvent solution polymerized 1,3 butadiene and aqueous emulsion polymerized 1,3 butadiene and where one or more of said rubbers is oil extended with 10 to 50 weight percent rubber processing oil before mixing with any of the other of said rubbers.

In another aspect of this inventioon, such a tire is provided characterized in that said medium vinyl polybutadiene is prepared by polymerizing the 1,3 butadiene with the divinylbenzene in hexane solvent with n-butyl lithium and in the presence of said polar catalyst modifier.

2

In a further aspect of this invention, such a tire is provided characterized in that said tread is applied to a cured tire carcass from which the previous tread has been buffed or abraded away and the tread cured thereon as a retread.

In a still further aspect of this invention, such a tire is provided characterized in that said tread is integral with and adhered to a carcass substrate rubber composition of at least one of butadiene/styrene copolymer rubber, cis 1,4 polyisoprene rubber and 1,4 polybutadiene rubber.

Such pneumatic tires are conventionally comprised of a generally toroidal shaped carcass with an outer circumferential tread adapted to be ground contacting, spaced beads and sidewalls extending radially from and connecting said tread to said beads.

The cis 1,4-polyisoprene rubber typically has a cis 1,4-content of about 96 to about 99 weight percent.

The major portion of the low vinyl polybutadiene is of the cis 1,4-configuration.

The medium vinyl polybutadiene typically has about 10 to about 40 percent of its monomer units in a cis 1,4-configuration and, after allowing for the medium vinyl content (1,2-monomer configuration) the remainder of the polymer is considered to be of monomer units in a trans 1,4-configuration.

The medium vinyl polybutadiene, in its unvulcanized state, is additionally characterized by having a ML-4 (100°C) viscosity in the range of about 40 to about 120.

These polybutadienes, particularly those in the higher ML-4 viscosity range, can optionally be individually oil extended before mixing with various rubber compounding materials for ease of processing. If oil extension is used, usually about 10 to about 50 phr of rubber processing oil is used, usually of the aromatic or aromatic/paraffinic oil type, to provide a ML-4 (100°C) viscosity of about 40—80.

In practice of this invention, it is intended that both organic solvent solution and aqueous emulsion polymerized 1,3-butadiene can suitably be used for the low vinyl polybutadiene.

It is a feature of this invention that a particular type of medium vinyl polybutadiene be used. Although the mechanism, precise physical or chemical property or polymer structure effect is not understood, at least one of or a combination of, depending on the tire and its service conditions, tire properties have been observed to be further enhanced by using such particular medium vinyl polybutadiene. Such enhanced tire properties include at least one of or a combination of rolling resistance, skid resistance and tread wear.

Such medium vinyl polybutadiene is of the type prepared by polymerizing 1,3-butadiene with a very small amount of divinyl benzene in a hydrocarbon solvent system, preferably an essentially non-polar aprotic solvent, with an alkyl lithium catalyst, and one or more polar catalyst modifiers to effect the polymer's vinyl content. For further details concerning such type of medium vinyl polybutadiene and a method of preparation, reference may be made to U.S. Patent No. 4,230,841.

It should readily be understood by one having skill in the art that said tread portion of the pneumatic tire as well as the rubber or other material in the basic carcass normally also contains reinforcing elements in the tread area, can be compounded by methods generally known in the rubber compounding art, such as mixing the various constituent rubbers with various curing aids, such as accelerators, processing additives, such as oils, resins and plasticizers, fillers, pigments, antioxidants and antiozonants and reinforcing materials such as, for example, carbon black.

The tire can be built, shaped, molded and cured by various methods which will be readily apparent to those skilled in the art.

In the practice of this invention, the polymer blend-tread can be integral with and adhered to various tire carcass substrate rubber compositions. Typically, such a rubber composition is at least one of a butadiene/styrene copolymer rubber, cis 1,4 polyisoprene (natural or synthetic rubber) and 1,4 polybutadiene. Optionally, such a blend, particularly where the tread is in the region of a sidewall area of the tire may contain one or more of butyl rubber, halobutyl rubber, such as chlorobutyl or bromobutyl rubber, and ethylene/propylene/conjugated diene terpolymer rubber, polyisoprene and polybutadiene rubber.

In the further practice of this invention, the tread can typically be applied in the building of the green tire in which the uncured, shaped tread is built onto the carcass following which the green tire is shaped and cured.

Alternately, the tread can be applied to a cured tire carcass from which the previous tread has been buffed or abraded away and the tread cured thereon as a retread.

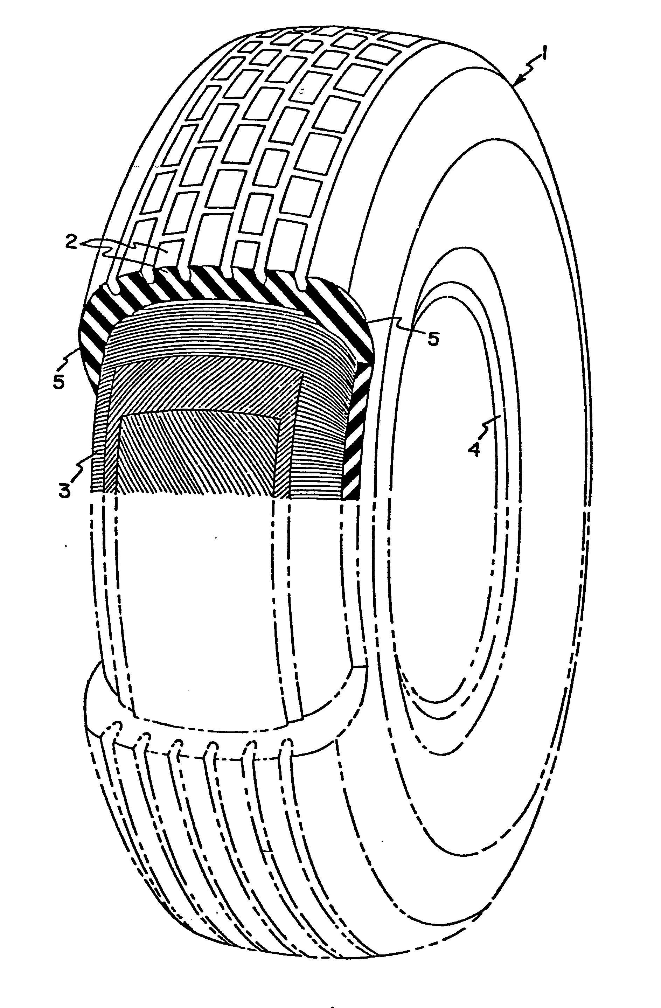

For further description of this invention, reference is made to the accompanying drawing which is a perspective view of a pneumatic tire having a cut-away portion.

Referring to the drawing, the tire 1 comprises the usual ground contacting tread portion 2, caracass, containing reinforcing elements such as plies and belt(s) and inner liner 3, spaced bead portion 4 for securing the tire to a rim and connecting sidewalls 5.

In particular, the tread portion 2 is shown as having the composite required by this invention of the blend of medium vinyl polybutadiene and low vinyl polybutadiene and, in one embodiment, also containing polyisoprene along with compounding agents.

The practice of this invention is further illustrated by reference to the following examples which are intended to be representative rather than restrictive of the scope of the invention. Unless otherwise indicated, all parts and percentages are by weight.

Example I

Pneumatic tires of conventional construction (grooved tread, sidewalls, spaced beads and supporting fabric-reinforced carcass) were built, shaped and cured in a conventional tire mold. The tread was built onto the uncured carcass as a pre-extruded element. The tires were of the P155/80R13 type which indicates that they were belted, radial ply passenger type tires somewhat similar to the drawing in this specification.

One tire is identified herein as Control X and another tire identified as Experimental Y.

Control tire X had a tread composed of (A) 70 phr butadiene/styrene rubber and (B) 30 phr low vinyl, or conventional, polybutadiene rubber and is intended to represent a somewhat conventional passenger tire tread.

Experimental tire Y had a tread composed of (A) 70 phr medium vinyl polybutadiene and (B) 30 phr low vinyl (conventional) polybutadiene.

Thus, the medium vinyl polybutadiene replaced the butadiene/styrene rubber of the conventional-type tread rubber.

The tires (X and Y) were mounted on rims, inflated and submitted to testing. The test values for the control were normalized to a value of 100 for comparison purposes. The tire with the experimental tread was tested and its test values compard to the values of the control tire and reported relative to the normalized values of 100.

Surprisingly, the tire with the experiment tread rubber composition Y exhibited an improved (reduced) rolling resistance while also showing improved (increased) skid resistance as compared to control tire X. This is considered to be an important departure from ordinarily expected results.

The tread compositions of tires X and Y were comprised of materials shown in the following Table 1.

TABLE 1

| Compound | Control (X) | Parts[1] Experimental (Y) |
|---|---|---|
| Butadiene/styrene rubber[2], oil extended (70 parts rubber, 26.25 parts oil) | 96.25 | 0 |
| Medium vinyl polybutadiene[3] rubber, oil extended (70 parts rubber, 26.25 parts oil) | 0 | 96.25 |
| Polybutadiene rubber[4] (1—2% vinyl) | 30 | 30 |
| Oil, aromatic | 9 | 9 |
| Antioxidant | 3.2 | 3.2 |
| Wax | 3.8 | 3.8 |
| Stearic acid | 2 | 2 |
| Carbon black | 70 | 70 |
| Sulfur | 1.5 | 1.5 |
| Accelerator | 1.2 | 1.2 |
| Zinc oxide | 4 | 4 |

[1]—Most amounts rounded to nearest tenth of a part.
[2]—Emulsion polymerization prepared SBR, oil extended with typical aromatic rubber processing oil.
[3]—Contains 26.25 parts typical aromatic rubber-extending type processing oil containing about 70 percent aromatics. Polymer contains about 45 percent 1,2- or vinyl, 26 percent cis 1,4 and 31 percent trans-1,4 and was of the type prepared by U.S. patent 4,230,841.
[4]—Conventional type polybutadiene rubber. (cis 1,4-).

Table 2 illustrates the rolling resistance and wet and dry skid resistance values with the Experimental Tire Y compared to values of Control Tire X normalized to 100.

TABLE 2

| Measured values | Control X | Experimental Y |
| --- | --- | --- |
| Rolling resistance | 100 | 95 (reduced, improved) |
| Wet skid resistance | 100 | 104 (improved) |
| Dry skid resistance | 100 | 104 (improved) |

Example II

Pneumatic tires of conventional construction (grooved tread, sidewalls, spaced beads, and supporting fabric-reinforced carcass) were built, shaped and cured in a conventional tire mold. The tread was built onto the uncured carcass as a pre-extruded element. The tires were of the 11R24.5 type which indicates that they were steel belted, radial ply truck tires somewhat similar to the drawing in this specification.

One tire is identified herein as Control XX and another tire identified as Experimental YY.

Control tire XX had a tread composed of (A) 25 phr butadiene/styrene rubber (B) 25 phr low vinyl, or conventional, polybutadiene rubber and (C) 50 phr cis 1,4-polyisoprene rubber. It is intended to represent a somewhat conventional truck tire tread.

Experimental tire YY had a tread composed of (A) 25 phr medium vinyl polybutadiene (B) 25 phr low vinyl (conventional) polybutadiene and (C) 50 phr cis 1,4-polyisoprene rubber.

Thus, the medium vinyl polybutadiene replaced the butadiene/styrene rubber of the conventional-type tread rubber.

The tires (XX and YY) were mounted on rims, inflated and submitted to testing. The test values for the control were normalized to a value of 100 for comparison purposes. The tire with the experimental tread was tested and its test values compared to the values of the control tire and reported relative to the normalized values of 100.

Surprisingly, the tire with the experimental tread rubber composition YY exhibited an improved (reduced) rolling resistance while also showing improved (increased) treadwear resistance as compared to control tire XX. This is considered to be an important departure from ordinarily expected results.

The tread compositions for tires XX and YY were comprised of materials shown in the following Table 3.

TABLE 3

| Compound | Parts[1] | |
| | Control (XX) | Experimental (YY) |
| --- | --- | --- |
| Butadiene/styrene rubber[2], oil extended D(25 parts rubber, 9.38 parts oil) | 34.38 | 0 |
| Medium vinyl polybutadiene[3] rubber, oil extended (25 parts rubber, 9.38 parts oil) | 0 | 34.38 |
| Polybutadiene rubber[4] (1—2% vinyl) | 25 | 25 |
| Cis 1,4-polyisoprene rubber[5] | 50 | 50 |
| Oil, aromatic | 4.6 | 4.6 |
| Antioxidant | 3 | 3 |
| Wax | 1.5 | 1.5 |
| Stearic acid | 2.5 | 2.5 |
| Carbon black | 70 | 70 |
| Sulfur | 1 | 1 |
| Accelerator | 0.8 | 0.8 |
| Zinc oxide | 3 | 3 |

[1]—Most amounts rounded to nearest tenth of a part.
[2]—Emulsion polymerization prepared SBR, oil extended with typical aromatic rubber processing oil.
[3]—Contains 9.38 parts typical aromatic rubber-extending type processing oil containing about 70 percent aromatics. Polymer contains about 45 percent 1,2- or vinyl, 26 percent cis 1,4 and 31 percent trans-1,4 and was of the type prepared by U.S. patent 4,230,841.
[4]—Conventional type cis 1,4-polybutadiene rubber.
[5]—Conventional high cis 1,4-polyisoprene rubber.

Table 4 illustrates the rolling resistance and treadwear values with the Experimental Tire YY compared to values of Control Tire XX normalized to 100.

TABLE 4

| Measured values | Control (XX) | Experimental (YY) |
| --- | --- | --- |
| Rolling resistance | 100 | 95 reduced, improved |
| Treadwear | 100 | 110 (improved) |

The treadwear was a measure of reduction in tread depth after about 32,000 miles (51,520 km) of test on a truck.

In these Examples, the rolling resistance was measured by mounting and inflating the on-a-rim tire and allowing it to be turned by a 67 inch (170 cm) diameter dynamometer under about 80 percent of its rated load at a rate equivalent to a vehicular speed of 50 mph (80 km/h) and the drag force measured. The test is believed to be somewhat standard.

The skid resistance was a standard test in which the tires (A and B) are mounted on opposite sides of a weighted, drawn trailer at various speeds and brakes of the trailer applied and skid force (peak and slide) measured.

The treadwear was compared by actually mounting both control and experimental tires on a vehicle and driving it under controlled conditions, with the position of the tires on the vehicle being periodically positionally rotated.

In these Examples, the medium vinyl polybutadiene rubber was of the hereinbefore described type prepared by U.S. Patent No. 4,230,841. As taught, the medium vinyl polybutadiene is prepared by polymerizing 1,3-butadiene with a very small amount of divinyl benzene in an essentially non-polar aprotic solvent with an alkyl lithium catalyst and at least one polar catalyst modifier.

Representative examples of such solvents are pentane, hexane, heptane, octane, isooctane and cyclohexene, of which hexene is preferred.

Representative examples of alkyl lithium catalysts are methyl lithium, ethyl lithium, propyl lithium, n-buty lithium, s-butyl lithium, t-butyl lithium and amyl butyl lithium. The n-butyl lithium is preferred.

The amount of catalyst is dependent upon the molecular weight desired for the polymerization. The amount of divinylbenzene can be related to the level of active lithium catalyst. The amount of polar compound is dependent upon the vinyl content desired in the polymer. For example, it is described in said patent that between about 0.10 and 1.0 millimols of active alkyl lithium per hundred grams of butadiene can be used and that a mole ratio of divinylbenzene (DVB) to alkyl lithium can be in the range of about 0.1 to about 0.9. It is preferred that the temperature of the polymerization is maintained substantially constant throughout the polymerization. Various polar modifiers are prescribed of which the strong catalyst modifiers are exemplified such as hexamethyl phosphoric acid triamide (HMPA), N,N,N',N'-tetramethylethylene diamine (TMEDA), ethylene glycol dimethyl ether (glyme), diethylene glycol dimethyl ether (diglyme), triethylene glycol dimethyl ether (triglyme) and tetraethylene glycol dimethyl ether (tetraglyme).

## Claims

1. A pneumatic tire having an outer circumferential tread adapted to be ground contacting, where said tread is a sulfur cured elastomeric composition comprised of, based on 100 parts by weight rubber (phr), (A) 20 to 90 parts by weight medium vinyl polybutadiene rubber having a 35 to 48 percent vinyl content, (B) 10 to 60 parts by weight low vinyl polybutadiene rubber having a 1 to 15 percent vinyl content and (C) up to 55 parts by weight cis-1,4-polyisoprene rubber, where said medium vinyl polybutadiene in its uncured state has a ML4 (100°C) in the range of 40 to 120 and is prepared by polymerizing 1,3-butadiene with a very small amount of divinylbenzene in a hydrocarbon solvent system with an alkyl lithium catalyst and in the presence of at least one polar catalyst modifier wherein 0.1 to 1.0 millimoles of active alkyl lithium per 100 grams of butadiene are used and the mole ratio of divinylbenzene to alkyl lithium is in the range of 0.1 to 0.9.

2. A pneumatic tire as claimed in Claim 1 characterized in that said tread elastomeric composition has 40 to 90 parts by weight medium vinyl polybutadiene rubber therein.

3. A pneumatic tire as claimed in Claim 1 characterized in that said tread elastomeric composition has 20 to 80 parts by weight medium vinyl polybutadiene rubber therein, and at least 10 parts by weight of cis 1,4 polyisoprene rubber therein.

4. A pneumatic tire as claimed in Claim 1 or Claim 3 characterized in that said tread compostion has 25 to 70 parts by weight of medium vinyl polybutadiene therein, and up to 50 parts by weight of cis 1,4-polyisoprene rubber therein.

5. A tire as claimed in anyone of Claims 1 to 4 characterized in that said low vinyl polybutadiene rubber is selected from the group consisting of organic solvent solution polymerized 1,3 butadiene and aqueous emulsion polymerized 1,3 butadiene and where one or more of said rubbers is oil extended with 10 to 50 weight percent rubber processing oil before mixing with any of the other of said rubbers.

6. A pneumatic tire as claimed in anyone of Claims 1 to 5 characterized in that said medium vinyl polybutadiene is prepared by polymerizing the 1,3 butadiene with the divinylbenzene in hexane solvent with n-butyl lithium and in the presence of said polar catalyst modifier.

7. A tire as claimed in anyone of Claims 1 to 6 characterized in that said tread is applied to a cured tire carcass from which the previous tread has been buffed or abraded away and the tread cured thereon as a retread.

8. A pneumatic tire as claimed in Claim 7 characterized in that said tread is integral with and adhered to a carcass substrate rubber composition of at least one of butadiene/styrene copolymer rubber, cis 1,4-polyisoprene rubber and 1,4-polybutadiene rubber.

## Patentansprüche

1. Pneumatischer Reinfen mit einer äußeren umlaufenden Lauffläche, die derartig ausgelegt ist, daß sie den Boden kontaktiert, wobei die Lauffläche eine mit Schwefel-vulkanisierte elastomere Masse ist aus, bezogen, auf 100 Gew.-Teile Kautschuk (phr), (A) 20 bis 90 Gew.-Teilen eines Vinylpolybutadienkautschuks mit mittlerem Vinylgehalt mit einem Vinylgehalt von 35 bis 48%, (B) 10 bis 60 Gew.-Teilen eines Vinylpolybutadienkautschuks mit geringem Vinylgehalt mit einem Vinylgehalt von 1 bis 15% und (C) bis zu 55 Gew.-Teilen cis-1,4-Polyisoprenkautschuk, wobei das Vinylpolybutadien mit mittlerem Vinylgehalt in seinem nichtgehärteten Zustand einen ML4-Wert (100°C) im Bereich von 40 bis 120 besitzt und hergestellt wird durch Polymerisation von 1,3-Butadien mit einer sehr kleinen Menge Divinylbenzol in einem Kohlenwasserstofflösungsmittel mit einem Alkyllithiumkatalysator sowie in Gegenwart wenigstens eines polaren Katalysatormodifizierungsmittels, wobei 0,1 bis 1,0 mMol aktives Alkyllithium pro 100 g Butadien

7

verwendet werden und das Molverhältnis von Divinylbenzol zu Alkyllithium im Bereich von 0,1 bis 0,9 liegt.

2. Pneumatischer Reifen nach Anspruch 1, dadurch gekennzeichnet, daß die elastomere Laufflächenmasse 40 bis 90 Gewichtsteile Vinylpolybutadienkautschuk mit mittlerem Vinylgehalt enthält.

3. Pneumatischer Reifen nach Anspruch 1, dadurch gekennzeichnet, daß die elastomere Laufflächenmasse 20 bis 80 Gewichtsteile Polybutadienkautschuk mit mittlerem Vinylgehalt und wenigstens 10 Gewichtsteile cis-1,4-Polyisoprenkautschuk enthält.

4. Pneumatischer Reifen nach Anspruch 1 oder 3, dadurch gekennzeichnet, daß die Laufflächenmasse 25 bis 70 Gewichtsteile Polybutadien mit mittlerem Vinylgehalt und bis zu 50 Gewichtsteile cis-1,4-Polyisoprenkautschuk enthält.

5. Reifen nach einem der Ansprüche 1 bis 4, dadurch gekennzeichnet, daß der Polybutadienkautschuk mit geringem Vinylgehalt ausgewählt wird aus der Gruppe, die aus in einer organischen Lösungsmittellösung polymerisiertem 1,3-Butadien besteht, wobei einer oder mehrere der Kautschuke mit 10 bis 50 Gew.-% Kautschukverarbeitungsöl von dem Vermischen mit einem der anderen Kautschuke gestreckt wird.

6. Pneumatischer Reifen nach einem der Ansprüche 1 bis 5, dadurch gekennzeichnet, daß das Vinylpolybutadien mit mittlerem Vinylgehalt hergestellt wird durch Polymiersation des 1,3-Butadiens mit dem Divinylbenzol in einem Hexan-Lösungsmittel mit n-Butyl-Lithium sowie in Gegenwart des polaren Katalysatormodifizierungsmittels.

7. Reifen nach einem der Ansprüche 1 bis 6, dadurch gekennzeichnet, daß die Lauffläche auf eine vulkanisierte Reinfenkarkasse, von der die vorige Lauffläche abpoliert oder abgeschliffen worden ist, aufgebracht wird und die Lauffläche zur Herstellung eines runderneuerten Reifens vulkanisiert wird.

8. Pneumatischer Reifen nach Anspruch 7, dadurch gekennzeichnet, daß die Lauffläche einen Integralbestandteil mit einer Karkassensubstrat-Kautschukmasse aus wenigstens einem Butadien/Styrol Copolymerkautschuk, cis-1,4-Polyisoprenkautschuk und 1,4-Polybutadienkautschuk bildet und daran anhaftet.


**Revendications**

1. Bandage pneumatique comportant une bande de roulement circonférentielle extérieure destinée à entrer en contact avec le sol, cette bande de roulement étant une composition élastomère vulcanisée au soufre comprenant, calculé sur 100 parties en poids de caoutchouc, (A) 20 à 90 parties en poids de caoutchouc de polybutadiène à teneur moyenne en vinyle ayant une teneur en vinyle de 30 à 48%, (B) 10 à 60 parties en poids de caoutchouc de polybutadiène à faible teneur en vinyle ayant une teneur en vinyle de 1 à 15% et (C) jusqu'à 55 parties en poids de caoutchouc de cis-1,4-polyisoprène, ce polybutadiène à teneur moyenne en vinyle ayant, à l'état non vulcanisé, une viscosité ML4 (100°C) se situant dans l'intervalle de 40 à 120, tandis qu'il est préparé en polymérisant du 1,3-butadiène avec une très petite quantité de divinylbenzène dans un système de solvant hydrocarboné avec un catalyseur d'alkyllithium et en présence d'au moins un modificatuer catalytique polaire, en utilisant 0,1 à 1,0 millimole d'alkyl-lithium actif par 100 g de butadiène, le rapport molaire entre le divinyl-benzène et l'alkyl-lithium se situant dans l'intervalle de 0,1 à 0,9.

2. Bandage pneumatique selon la revendication 1, caractérisé en ce que la composition élastomère de la bande de roulement contient 40 à 90 parties en poids de caoutchouc de polybutadiène à teneur moyenne en vinyle.

3. Bandage pneumatique selon la revendication 1, caractérisé en ce que la compostion élastomère de la bande de roulement contient 20 à 80 parites en poids de caoutchouc de polybutadiène a teneur moyenne en vinyle, ainsi qu'au moins 10 parties en poids de caoutchouc de cis-1,4-polyisoprène.

4. Bandage pneumatique selon la revendication 1 ou 3, caractérisé en ce que la composition de la bande de roulement contient 25 à 70 parties en poids de polybutadiène à teneur moyenne en vinyle et jusqu'à 50 parties en poids de caoutchouc de cis-1,4-polyisoprène.

5. Bandage pneumatique selon l'une quelconque des revendications 1 à 4, caractérisé en ce que le caoutchouc de polybutadiène à faible teneur en vinyle est choisi parmi le groupe comprenant le 1,3-butadiène polymérisé en solution dans un solvant organique et le 1,3-butadiène polymérisé en émulsion aqueuse, un ou plusieurs de ces caoutchoucs étant dilué(s) à l'huile avec 10 à 50% en poids d'une huile de plastification du caoutchouc avant le mélange avec n'importe lequel des autres caoutchoucs.

6. Bandage pneumatique selon l'une quelconque des revendications 1 à 5, caractérisé en ce que le polybutadiène à teneur moyenne en vinyle est préparé en polymérisant le 1,3-butadiène avec le divinyl-benzène dans un solvant d'hexane avec du n-butyl-lithium et en présence du modificateur catalytique polaire précité.

7. Bandage pneumatique selon l'une quelconque des revendications 1 à 6, caractérisé en ce que la bande de roulement est appliquée, à une carcasse de bandage pneumatique vulcanisée de laquelle la bande de roulement précédente a été éliminée par râpage ou par abrasion avant d'y appliquer la bande de roulement vulcanisée à la manière d'un rechapage.

8. Bandage pneumatique selon la revendication 7, caractérisé en ce que la bande de roulement est solidaire de et adhére à une composition de caoutchouc de substrat de carcasse comprenant au moins un des constituants suivants: un caoutchouc de copolymère de butadiène/styrène, un caoutchouc de cis-1,4-polyisoprène et un caoutchouc de 1,4-polybutadiène.